# EUROPEAN PATENT APPLICATION

(11) **EP 2 139 180 A1**
(43) Date of publication of application: **30.12.2009**
(21) Application number: 08305353.8
(22) Date of filing: 27.06.2008
(51) Int. Cl.: H04L 12/56

(54) **A method to unify multiple subscriber identity profiles in a telecommunication system**

(71) Applicant: FRANCE TELECOM, 75015 Paris (FR)
(72) Inventor: Fuccellaro, Jean-Louis, LONDON, W3 9SN (GB); Murzeau, Bastien, BARNET, EN5 3BW (GB)

(57) **Abstract**

The invention relates to a method, in a telecommunication system comprising at least a home geographic region and a visited geographic region, for providing a mobile device with access to communication services, said method comprising the acts of receiving an update location message from a mobile device entering the visited geographic region, the update location message comprising a home subscriber identity associated with said mobile device, said home subscriber identity allowing identification of said mobile device with a home geographic region different from said visited geographic region, verifying if no local subscriber identity for the visited geographic region has been previously sent to the mobile device, and when no local subscriber identity has been previously sent, the method further comprises the acts of selecting, at least based on the received home subscriber identity, a local subscriber identity from a pool of available local subscriber identities for the visited geographic region, each available local subscriber identity allowing, when used by a mobile device, identification with said visited geographic region and subsequent access to communication services from said visited geographic region, and sending the selected local subscriber identity to the mobile device for subsequent access of said mobile to the plurality of telecommunication services after identification using said selected local profile.

## Description

### FIELD OF THE PRESENT SYSTEM:

The present invention generally relates to telecommunications, and more specifically to the delivery of enhanced communications services.

### BACKGROUND OF THE PRESENT SYSTEM:

Mobile phones have become important devices in our daily life. A mobile phone or device is generally a subscriber to a telecommunication network in order to enjoy communication services, such as voice, data, ... A mobile user is generally identified using an International Mobile Subscriber ldentity, or IMSI. The mobile IMSI is a unique number associated with all GSM and Universal Mobile Telecommunications System (UMTS) network mobile phone users. It is stored in the Subscriber ldentity Module (SIM) inside the phone. The SIM is actually unique to one subscriber and carries information to identify that subscriber in his home network, i.e. the network he is a subscriber of. This information includes the IMSI, further authentication data, and other data. The SIM is generally provided by the network operator when a user gets his subscription.

When a user switches his mobile phone on, or when he enters a region covered by his home network, one or more radio signals are transmitted to a base station of the home network, and a subsequent authentication process is carried out using the IMSI number so as to identify the mobile as a subscriber to the network it is located in. Passed that authentication process, the mobile user can enjoy a plurality of communication services based among other things on the type of subscription he has chosen. A directory number, or MSISDN (Mobile Station International Subscriber Directory Number) is also associated in the home network to the unique number IMSI identifying the subscription (i.e. subscriber). This is actual the subscriber phone number in his home network.

When visiting a different network, here after called a visited network or visited geographic region, provided a roaming agreement exists between the home and visited network, the authentication will lead to identifying the mobile device as a subscriber of a different network. The user may still enjoy communication services, depending among other things on:
- the communication services he has subscribed to in his home network,
- the roaming agreement between his home network and the visited network,
- the services available in the visited network.

As existing mobile telecommunication systems allow a mobile subscriber to use only one single subscriber identity or profile (e.g. a single IMSI) to identify himself before its home or a visited network, one major downfall is the resulting billing. Indeed, when roaming within a visited geographic region, a user will be charged a local access along with his regular fees when using a communication service.

With emerging new mobile convergence solutions, a user is potentially offered now several mobile network profiles according to the geographical regions he is located in. For instance, the user of a mobile device (mobile in short) could have a public/home profile but also a corporate profile provided by his company, each profile respectively allowing authentication with a public network and the company network. With the example here above, the corporate profile may provide extra and specific corporate services like short dialing, SMS broadcast notification ... but also internal calls as the mobile device may being connected to the company's PBX (Private Branch exchange). A subscriber can thus benefit from his company's network infrastructure for added communication services. Conversely, the home profile may correspond to a subscription limited to local calls, so that the company users do not overuse their mobiles outside the corporate network. Furthermore, to each given profile corresponds a directory number, i.e. the number the user can be reached at when using this given profile.

A user may access his multiple subscriptions through a login and password in order to activate his connection and access the related network. Other solutions exist as mobiles with multiple SIM cards are available today. Recent development in SIM cards have allowed SIM cars that may also store more than one subscriber identity.

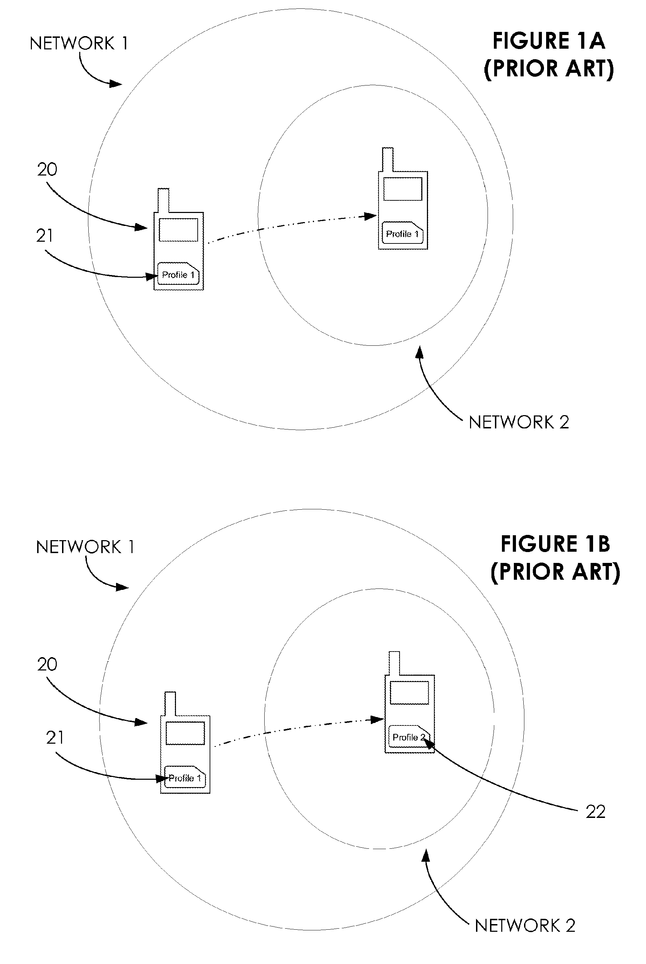

FIG. 1A illustrated a mobile device 20 moving from network 1, for instance its home network, to a visited network 2. Mobile 20 comprises a SIM card which carries a first profile 21 allowing authentication with network 1 and a second profile 22 allowing authentication with network 2 (not shown in FIG. 1A). Without any management of the different subscriber identities 21 and 22, mobile 20 will remain registered with network 1 even though network 2 may be detected. If network 2 is a user's company network, he will not be able to authenticate with his company network. The same situation is true if the two networks were disjoint networks, as the loss of network 1 coverage, following by network 2 detection would only trigger a roaming solution based on the first profile, provided a roaming agreement exists between the two networks.

One solution is to switch manually between profiles. Another solution is to automatically switch from one subscriber identity to another one, as known from WO98/10614. In this document, a user is provided with two subscriber identities, and his mobile phone may switch from one profile to the other when changing network. This solution is illustrated in FIG. 1B, mobile 20 moves from network 1, wherein it was identified through its first profile 21, to network 2, wherein it authenticates itself with his second profile 22. Once identified in network 2 with his second profile 22, the user is registered before said network 2 and manage as any subscribers of network 2.

One major blocking point to deploy such existing solutions is the service continuity when the subscriber switches from one identity to another. For instance, how can a user received an incoming call in his network 1 MSISDN number when his mobile has identified itself on another network 2 using a second subscriber identity ? Conversely, how can a user present his network one identity (i.e. his network 1 MSISDN) when placing a call in network 2 after authentication with his second profile. With several profiles, a user will have to manage several voicemails, and several billing accounts.

Another blocking point is the management of the different subscriber identities, i.e. when it is relevant to switch identities in the presence of a different network or a plurality of networks. Furthermore, when a user enter into a new network, he may be interested in benefiting from the local communication services, even though a roaming agreement does not exist between his home network and the visited network.

Today there is still a need for solution that allows an improvement management of the different subscriber identities from a user. There is a further need for a solution that allows a user to manage different subscriber identities even in visited geographic regions he discovers for the first time.

### SUMMARY OF THE PRESENT SYSTEM AND METHOD:

It is an object of the present system, processor and method to overcome disadvantages and/or make improvements in the prior art.

To that extent, the present method proposes a method for providing a mobile device with access to communication services according to claim 1.

Thanks to the present method, a method is provided to improve the management of a plurality of subscriber identities (i.e. profiles) readily available on the user's mobile. Each time a network is detected through one of its interface, the mobile will send an update location message to inform a profile manager node in the telecommunication system that its new location correspond to a visited network. The message will comprise the mobile home subscriber identity so that the profile manager node can verify if this is a first visit or not. Provided this is a first visit, a local subscriber identity may be sent to the mobile so that said mobile can identify itself through this local subscriber identity before the visited network. Different levels of communication services may be enjoyed by the mobile device depending on the criteria used to select the local subscriber identity among the pool of local subscriber identities.

As illustrated here after, different local subscriber identities may be available to the mobile device visiting the visited geographic region. Such local subscriber identities may be allocated by the visited network following agreement between the home network operator from the mobile device and this visited network.

As several profiles of the visited geographic region may be available to the same user, access rights may vary from one profile to the other, so as to offer different levels of communication services to a user depending on the selected local profile.

A profile manager node according to claim 5, a mobile device according to claim 9, a telecommunication system according to claim 11 as well as a computer program according to claim 15, will be also described here after.

### BRIEF DESCRIPTION OF THE DRAWINGS:

The present system, call management node and method are explained in further detail, and by way of example, with reference to the accompanying drawings wherein:
FIG. 1A shows an illustration of a known system wherein a mobile moves from a first to a second network while keeping the same subscriber identity,
FIG. 1B shows an illustration of a known system wherein a mobile moves from a first to a second network while switching subscriber identities,
FIG. 2 shows an illustration of a known system illustrating the identification of a mobile with it home subscriber identity in its home network as well as in a visited network,
FIG. 3 shows an exemplary embodiment of the present system,
FIG. 4 shows a flow chart illustrating an exemplary embodiment of the present method,
FIG. 5A-B shows a flow chart illustrating another exemplary embodiment of the present method,
FIG. 6 shows an alternative embodiment of the present system, and
FIG. 7A-B shows a flow chart illustrating an alternative embodiment of the present method.

### DETAILED DESCRIPTION OF THE PRESENT SYSTEM AND METHOD:

The following are descriptions of exemplary embodiments that when taken in conjunction with the drawings will demonstrate the above noted features and advantages, and introduce further ones.

In the following description, for purposes of explanation rather than limitation, specific details are set forth such as architecture, interfaces, techniques, etc., for illustration. However, it will be apparent to those of ordinary skill in the art that other embodiments that depart from these details would still be understood to be within the scope of the appended claims.

Moreover, for the purpose of clarity, detailed descriptions of well-known devices, systems, and methods are omitted so as not to obscure the description of the present system. Furthermore, routers, servers, nodes, base stations, gateways or other entities in a telecommunication network are not detailed as their implementation is beyond the scope of the present system and method.

Unless specified otherwise, the exemplary embodiment will be described hereafter in its application to a mobile device comprising a SIM which can store a plurality of subscriber identities. This illustration is in no way a limitation of the scope of the present method and system as other subscriber identities may be stored in different ways on a mobile device.

Furthermore, what will be referred to as a "call" in this description may be a standard voice call or any other session established between a first party A, referred to a user A, or the calling user, and another party referred to as user B, or the called user. One will understand of course that the call is placed more precisely between the users telecommunication devices, i.e. the calling device and the called device, for instance a video call between user A and user B. Each side of the call in the telecommunication network will be referred to a branch or a leg of the call. Additionally, roaming, unless mentioned otherwise, may be understood in its broadest meaning as moving from first to a second network, these networks possibly being overlay networks (i.e. being on top of each other or with an overlapping geographical region).

Unless mentioned otherwise, the present teachings may also be transposed to message exchange such as SMS (Short Message Service), or MMS (Multimedia Messaging Service) for instance.

The home network is the network a given user is initially a subscriber of. It will also be referred to as the primary network. The local or visited network, also referred to as the visited geographic region, correspond to a network different from the home network, or home geographic region.

In addition, it should be expressly understood that the drawings are included for illustrative purposes and do not represent the scope of the present system.

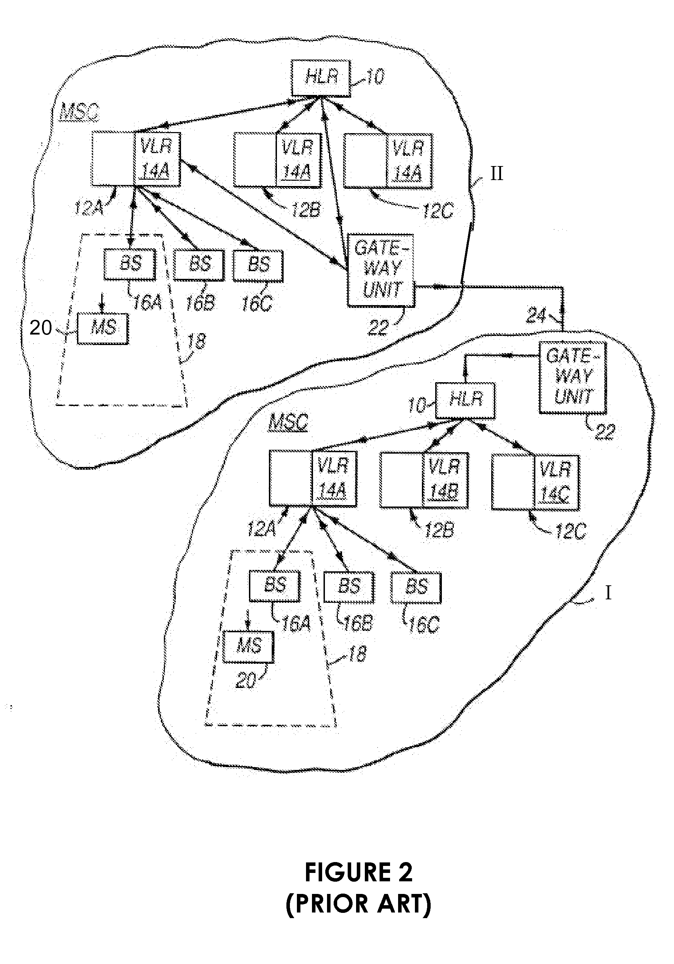

FIG. 2 illustrates a known exemplary of a telecommunication system comprising a first network 1 and a second network 2. Both networks will be illustrated hereafter as GSM (Global System for Mobile communications) networks. These two networks do not overlap to illustrate the different authentication process, either in the home network (network 1) or a visited network (network 2). Other illustrations (UMTS, CDMA, ... or combination thereof) are readily available to the man skilled in the art.

A home location register (HLR) 10 is provided both in network I and network II. This node is generally dedicated to storing information relating to each subscriber of network 1 (network 2 respectively). Thus, data about each network subscriber, such as his phone number in the network (MSISDN), his International Mobile Subscriber identification (IMSI), information used for authentication purposes, and other data may be stored in the network HLR. The MSISDN (Mobile Station International Subscriber Directory Number) is a unique number associated to the subscriber identity, and identifying a subscription (i.e. subscriber) in a mobile network. In other words, it is the telephone number to the SIM card of the mobile device.

Both networks also include several mobile switching centers(MSCs) 12A, 12B and 12C, each of which includes a respective visitor location register (VLR)14A, 14B and 14C. Each MSC controls a number of base stations. For instance, MSC 12A controls the base stations 16A, 16B and 16C. Each base station transmits and receives radio signals within a respective geographical area of coverage, also called a cell of the network.

In the illustration of FIG.2, mobile phone is initially located in cell 18 of network 1, associated with base station 16A. For simplification purposes, only one HLR is illustrated per network as well a limited number of base stations and cells.

The mobile device 20 in network 1 may be activated by means of its SIM card, which, as explained before comprises a unique home subscriber identity specific to one subscriber of network 1. The SIM card carries also other data for identification of this subscriber.

When the mobile device 20 is powered up in network 1, a radio signal is transmitted to base station 16A and passed to MSC 12A. The MSC checks whether the subscriber's details are currently stored in VLR 14A. It will be initially assumed that they are not. The MSC 12A therefore interrogates the HLR using the subscriber's IMSI to access the data stored in the HLR relating to that subscriber. An authentication sequence is then formulated by the HLR and passed on to the MSC 12A for authentication of the mobile device 20.

Subsequent to the authentication request from the MSC 12A, the mobile device will produced an authentication response, derived by the SIM. Using encryption algorithms. Provided the response is correct, the mobile 20 is considered authenticated. A further request from the MSC 12A to the HLR will indicate the type of communication services the mobile 20 is entitled to, based on the user level of subscription. The mobile 20 is thus "registered" in its home network and can enjoy the communication services the user has subscribed to. The HLR has also recorded the present location of the mobile 20. VLR 14A is also updated accordingly.

As VLR 14A handles a plurality of base stations 16A to 16C, the mobile 20 can enjoy the same services within the cells associated with VLR 14A.

If the mobile device 20 moves to cells handled by a different MSC, such as MSC 12B or 12C, the same authentication process will be carried out again. The subscriber's data previously stored in VLR 14A will be subsequently deleted, and the VLR associated to the new MSC updated accordingly.

Thanks to the hereabove authentication process, an incoming call to network 1 for mobile 20 may be directed to said mobile by the HLR through the appropriate MSC.

When a roaming agreement exists between a home network (network 1) and a visited network (network 2), mobile 20 may receive calls or enjoy some communication services when temporarily visiting (often referred to as roaming) network 2.

As illustrated in FIG. 2, network 2 presents a similar arrangement as network 1. When mobile 20 arrives in cell 18 of network 2, it will send a signal to base station 16A corresponding to cell 18, and thus to MSC 12A. The MSC 12A of network 2 will check its associated VLR 14A for the subscriber's data corresponding to mobile 20. The signal transmitted by mobile 20 will include data identifying itself as a subscriber to network 1. In other words, MSC will not find any corresponding subscriber data in network 2 HLR.

Thanks to the roaming agreement between networks 1 and 2, MSC will interrogate mobile 20 home HLR through gateway units 22 linking the two networks. The authentication sequence will then be formulated by the HLR from mobile 20 home network. The sequence will be passed on back to the MSC 12A of network 2 and subsequently mobile 20 through the gateway units.

Based on the roaming agreement, mobile 20 subscription in its home network as well as the communication services available in network 2, mobile 20 will still be able to enjoy a number of communication services while roaming in network 2. One may note though that if the user may have the feeling that he is a subscriber of network 2, it is only through the roaming agreement that he can have feeling.

Multiple subscriber identities will allow a user to be a subscriber in a plurality of different networks. In the hereafter description, unless mentioned otherwise, the identification will refer to the act carried out by a mobile device to identify - i.e. authenticate - itself before a network as a subscriber to said network. The identification will involve a subscriber identity for this network. Once the identification completed and successful, the mobile is registered in this network.

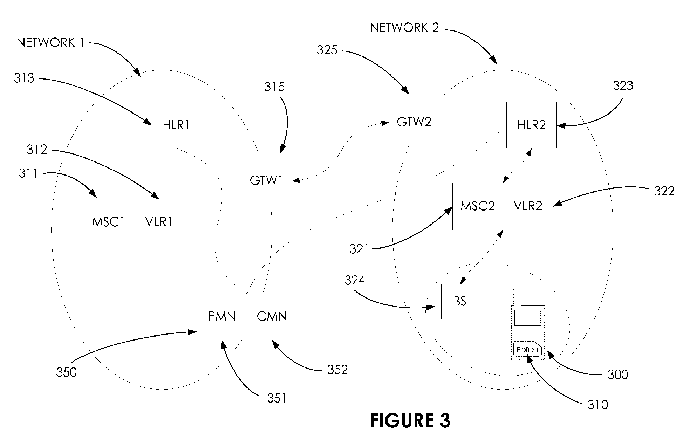

FIG. 3 shows an exemplary embodiment of the present system. A first network, network 1 is illustrated as a GSM network. It comprises an HLR 313 (HLR1), a MSC 311 (MSC1), a VLR 312 (VLR1) and a gateway 315 (GTW1) for exchanging data with other networks.

A second network, network 2 is also illustrated as a GSM network. It comprises an HLR 323 (HLR2), a MSC 321 (MSC2), a VLR 322 (VLR2) and a gateway 325 (GTW2) for exchanging data with other networks.

For simplification purposes, both networks are illustrated with only one HLR, one MSC, one VLR and one gateway. Actual networks are more complex, but the present illustration will allow the man skilled in the art to transpose the enclosed teachings to more complex networks.

A mobile device 300 has arrived in the cell region attached to base station 324 of network 2. Mobile 300 is a subscriber of network 1 and has a first profile 310 stored for instance in its SIM card.

The first profile may correspond to the initial profile the user will receive upon registration with network 1 operator. It will be referred to hereafter as the home or primary profile, and network 1 as the user primary network. The present method may be offered by network 1 operator as a service to offer to its users a variety of subscriber identities for other networks it has partnered with. Users could then become members benefiting from this service. Network 2 is the visited network. The second profile is a local profile to said visited network.

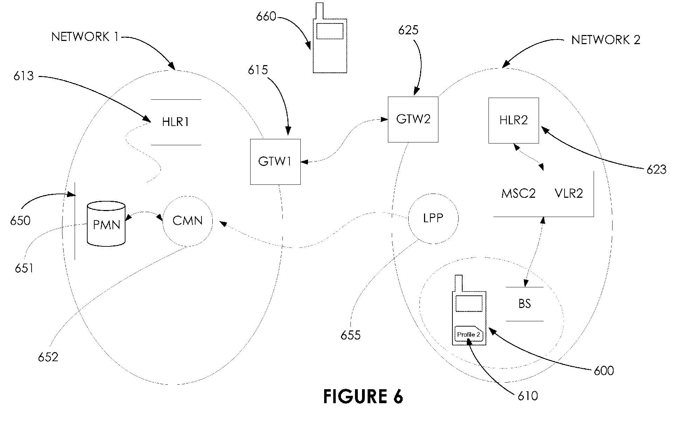

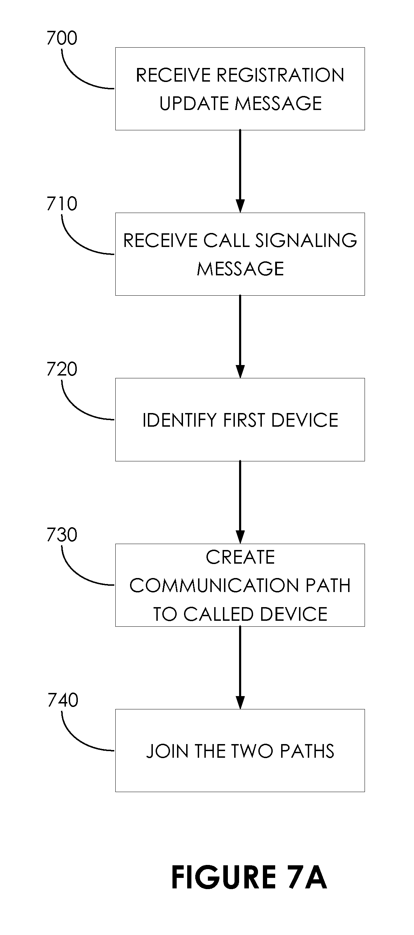

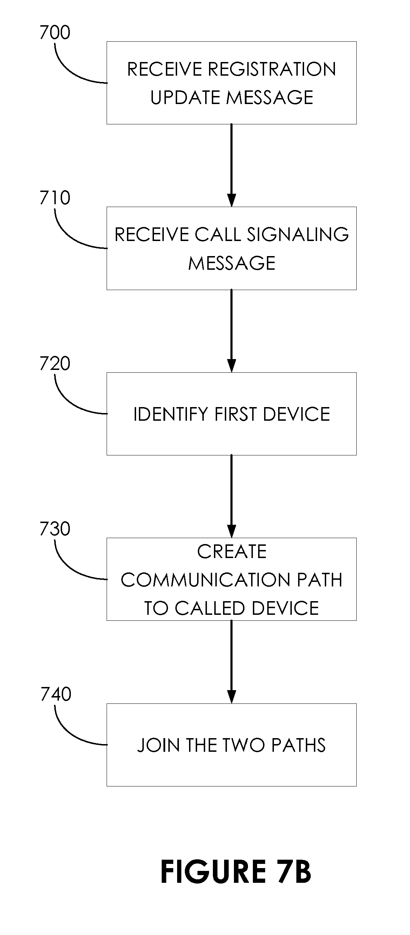

The management of the different profiles, as well as the call and data handling may be achieved through a mobility service platform 350 (MSP) provided in the present system. Mobility service platform 350 may comprise:
- a profile manager (PMN) part or node 351 to manage the different profiles (i.e. subscriber identities) mobile 300 will need to identify itself to other networks (different from network 1). PM node 351 may be provided in network 1 or elsewhere, provided this node receives the proper update location message from the mobile 300, or from a different source, as explained later,
- a call management (CMN) part or node 352 to handle the message and data routing between mobile 300 and other communication devices when interacting with each others. Call management node 352, as illustrated later on with respect to FIGs. 6 and 7 will use the data stored by profile manager node 351 in its database.

One may note that illustrating the mobility service platform 350 as comprising two parts is in no way limiting as these two parts could be hosted by the same node or server, or being operatively linked to each other. The two part presentation helps to illustrate the different tasks performed by the mobility service platform 350 in the present system.

In the present method, the profile manager node 351 is a network entity which is adapted to:
- selects and allocates local profiles for visited network, and make them available to the mobile,
- manages a pool of available local profiles for a plurality of visited networks. To that extend, profile manager node 351 may be associated to a database (not shown in FIG. 3) for storing relevant data about mobile device 300 as illustrated here after.

Furthermore, the profile manager node 351 may also:
- provide access rights to a mobile device for a list of networks and services. Indeed different local profiles may be readily available to a user entering a visited network, the local profiles being associated to different communication services. In other words, if two local profiles will allow the mobile to identify itself before the visited network, they may grant different access rights as the available communication services could be different depending on the type of subscription (in the visited network) they are associated with,
- is a repository of all needed information for a mobile to get access to network and services in the visited networks (through the subscriber identities, and additional data if needed).

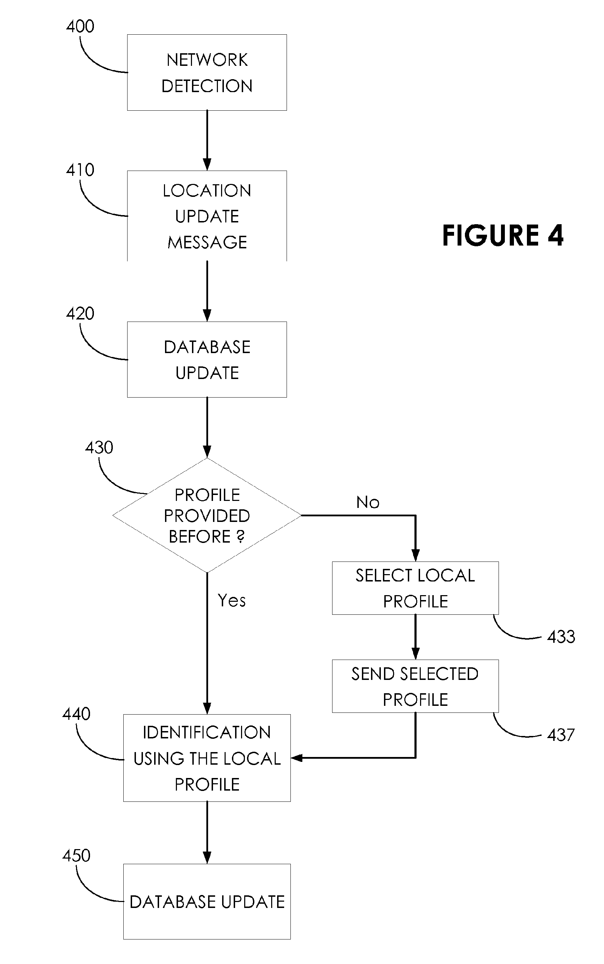

FIG. 4 is a flow chart illustrating an exemplary embodiment of the present method. In a preliminary act 400, once a given mobile 300 in FIG. 3 enters a visited geographic region (network 2), as its network interface scans periodically for network detection, one or more networks will be detected. While under the coverage of one or more networks, mobile 300 will require some ways to detect other networks. The 3GPP (3rd Generation Partnership Project) standard illustrates one way of performing network detection and selection for a mobile. The details of the detection act are beyond the scope of the present method and system. It is important though to note that a mobile is adapted to scan and discover other visited networks than the network it is a subscriber of. The detection mechanism may be implemented either in the form of a SIM Tool Kit applet or a software installed on the mobile.

In a further act 410, the profile manager node 351 will receive from the mobile an update location message comprising at least:
- data representative of the primary subscriber identity of mobile 300, this may be the primary subscriber identity itself, or data (for instance encrypted data) allowing the profile manager node to identify mobile 300 primary subscriber identity. More generally, the message will comprise data representative of the primary subscriber identity,
- location information characterizing the scanned network(s). This may be for instance the network identity, the type of network, the cell identity, ... or any other information relevant to the profile manager node to identify the visited network. The location information may for instance be the information typically broadcasted by a network, i.e. its MNC (Mobile Network Codes), MCC (Mobile Country Code), ...

Alternatively, the update location message may be received from a different source, such as for example the VLR 312 (VLR1) of FIG. 3.

In order to send the update location message, the mobile device 300 may use one of the available networks. Indeed in the illustration of the exemplary embodiment of FIG. 3, network 1 and 2 are disjoint network, i.e. with no overlapping region. When entering network 2, mobile network may have to opt first for a roaming approach in order to send messages to the profile manager node. For networks with overlapping regions, e.g. as illustrated in FIG. 2B, mobile node 300 may detect other networks while still registered in its home network. The routing of the update location message to the profile manager node uses techniques known from the man skilled in the art and is beyond the scope of the present method.

The update location messages will inform the profile manager node of one or more visited networks detected by the mobile node.

In a further and optional act 420, the profile manager node may update its database with the given mobile 300 new location.

In a subsequent act 430, profile manager node will check, using the home subscriber identity, whether a local subscriber identity for the visited network (network 2) has been previously sent to the given mobile device.

To do so, profile manager node may store a plurality of data for the user of the given mobile 300. Table 1 is an exemplary embodiment of such data. The hereafter Table 1 discloses the unique IMSI as the subscriber identity as the present illustration is related to GSM networks. Other unique subscriber identities may be envisaged by the man skilled in the art.

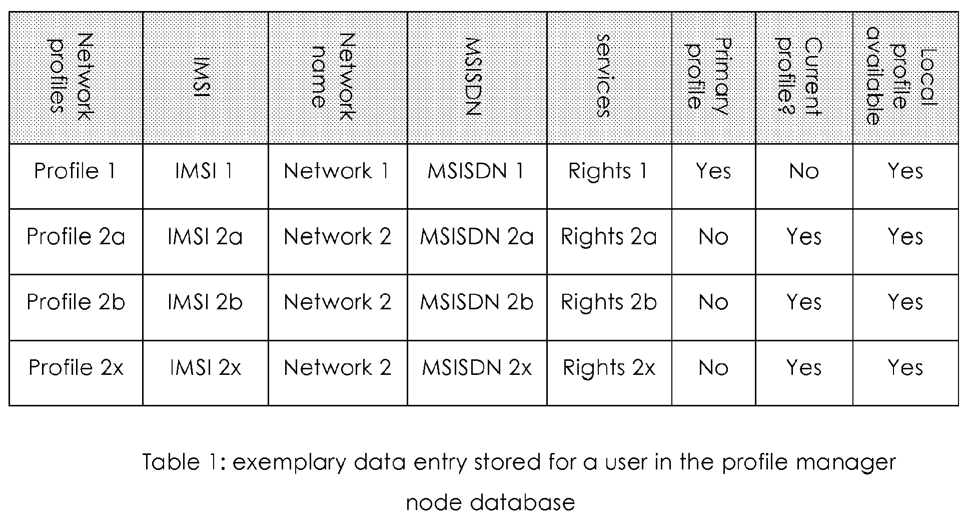

The last column indicates whether a local profile is already stored on the mobile. For the visited geographic region, profile manager node may have access to a pool of available local subscriber identities. As mentioned before, each available local subscriber identity allows, when used by a mobile device, identification with said visited geographic region and subsequent access to communication services from said visited geographic region. These available local subscriber identities are subscriber identities allocated for mobile devices entering the visited geographic region. They may result from agreement between operators of the primary and the visited networks. The allocation may have different levels:
- the agreement between operators lead to a pool of local subscriber identities available to the users of the primary network. Each time a local subscriber identity is needed, the profile manager node will select one local subscriber identity from this pool and allocated it to the user of mobile 300 the first time it sends an update location message from the visited network,
- the hereabove pool of subscriber identities is distributed, i.e. allocated to the users of the primary network, before these users first request a local subscriber identity. This may allow to allocate different local subscriber identities to users depending on various parameters. A first user will not be necessarily given the same pool of available local subscriber identities as a second users,
- a combination of the two previous levels.

Different types of profiles may be available for a user:
● a reserved profile: such a profile is retrieved from a pool of available local profiles and is allocated only once by the profile manager to a user. It is a permanent allocation, i.e. once a user has retrieved it after its selection, his mobile will keep it for any further identification in the visited network. In other words, such reserved profiles have a permanent validity,
● a dynamic profile: this profile is retrieved from a pool of available profiles and is granted for a period of time to the user. The profile is reallocated to the pool after its validity has lapsed. For instance, it may be erased from the mobile memory or blocked from any further reading in this memory. On the profile manager node, the entry for the corresponding profile in the given mobile table may be erased. In other words, such dynamic profiles have a limited or temporary validity.

As indicated by the data stored for the given mobile, if a local profile for network 2 has been sent before to said mobile (branch "Yes" in FIG. 4), act 440 will be carried out.

Conversely, if no local profile for network 2 has been sent before to said mobile (branch "No" in FIG. 4), as indicated in the data stored for the given mobile, the profile manager node 351 will, in a subsequent act 433, select a local profile from the pool of available profiles. The selection may depend upon:
- the mobile 300 level of subscription with his primary network,
- the agreement between the operators of the primary and the visited networks,
- if the present method is offered as a service to the users of network 1, the different options user 300 may have selected in registering with this service,
- when the visited network is a corporate network, the needs of the employee owing the mobile device 300,

Various parameters may be taken into account for the selection of the right subscriber identity for the visited network. For instance, as seen in the illustration of Table 1, a couple of profile, namely Profile 2a and Profile 2b, are allocated to the given user, each of them granting different access rights (Rights 2a and Rights 2b respectively, with Rights 2b higher than Rights 2a for instance) for the communication services offered in the visited network. If Profile 2a has been sent before, and for some reasons, the user has requested/been offered higher access rights in network 2, Profile 2b may be selected the next time his mobile sends an update location message, so that he can benefic from Rights 2b, larger than the initial Rights 2a.

In a further act 437, the selected subscriber identity will be sent to the given mobile. In an additional embodiment of the present method, the mobile device may acknowledge the receipt of the selected subscriber identity to the profile manager node. Whether an acknowledgement of receipt is sent back to the profile manager node or not, this node 351 will update its database with based on act 437, i.e. the data stored for the mobile device 300 will be updated with an indication that the selected local subscriber identity (Profile 2a for example) has been sent to said mobile 300. For instance, table 1 will list an entry for Profile 2a with an indication that this profile is available locally in the given mobile 300.

In an additional embodiment of the present invention, the selected local profile may need to be activated by the profile manager node prior to any successful identification by the mobile in the visited network. In other words, the profile manager node will validate with the visited network each local profile sent to a mobile device. Indeed the allocated local profiles may not be used by any mobile device without an activation message sent by the profile manager node to an entity of the visited network, for instance HLR2. Thanks to an activation message sent to HLR2 about a sent profile (say Profile 2a), HLR2 will recognize the mobile device 300 identifying itself with Profile 2a as a actual subscriber (as described before in relation to FIG. 2). This activation may be seen as authorizing the allocated profiles for further use by a mobile.

This additional embodiment may add additional security to the allocated profiles, so that their sending in act 437 will not suffice for the mobile to identify itself. If in some ways the allocated profiles are stolen, a mobile identifying itself with a stolen local profile, i.e. a profile not authorized yet through the activation message, will not be recognized as a subscriber to the visited network, this stolen profile being still "inactive" as long as it is not validated by the profile manager node.

In a further act 440, whether a local subscriber identity has been selected and sent to the mobile device (branch "No" of FIG. 4) or was provided previously (branch "Yes" in FIG. 4), the mobile identifies itself in the visited network using the selected local profile. Thus the mobile device can access the plurality of communication services (based on the access rights for the sent profile) once the identification is completed. Some devices may need at this stage to log off the primary network prior to identification with the visited network.

One may note that the identification using the sent local profile may be triggered by the profile manager node itself through an "identification triggering" message. This message may be either sent with the selected profile (in act 437), or sent subsequently to this act. The triggering message will cause the mobile to identify itself with the sent local subscriber identity, whether the local profile was just sent (branch "No" in FIG. 4) or sent previously (i.e. already present on the mobile device, branch "Yes" in FIG. 4).

Alternatively, the mobile device 300 may be adapted to identify itself before the visited network on its own, i.e. without any triggering message from the profile manager node.

Once the mobile has identified itself to the visited network using the local profile, it becomes an actual subscriber to the local network. A roaming solution is therefore not necessary.

One may note that the act 440 may be carried out either shortly after the mobile device has entered the visited geographic region, i.e. subsequent to acts 430 or 437 (depending on the "YES" or "NO" branch), or at a different time later on. The sending of the local subscriber identity in act 437 may been then seen as a provision of an additional local subscriber identity to the mobile.

In a subsequent act 450, the profile manager node database, e.g. the data stored for the given mobile, will be updated with an indication that the local profile is the active (i.e. current) profile on the mobile. This update may be triggered by a registration update message sent by the mobile device.

With the illustration of Table 1, provided Profile 2a is the active profile, the new entry may become:

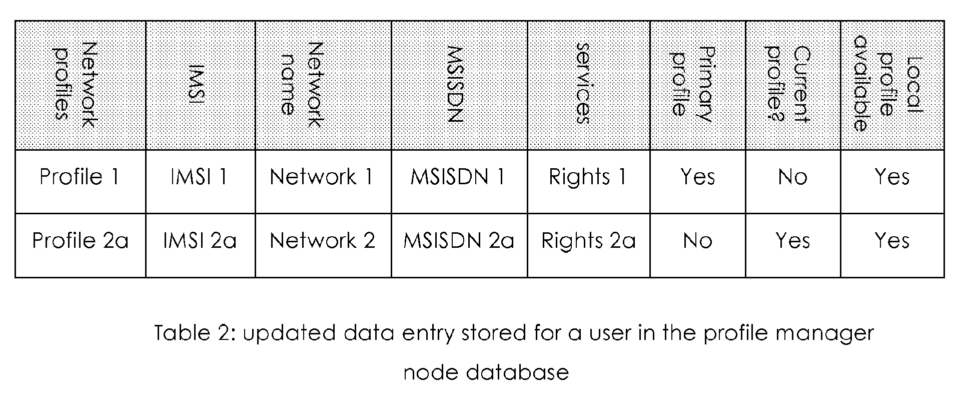

The registration update message of act 450 may be triggered in various ways. For instance:
- a direct update: the mobile device 300 may send the update message reporting to the profile manager node that it has identified itself before network 2, and therefore the local profile is now the active profile,
- the update may be indirect, as HLR2 (see FIG. 3) will after act 440 store information about mobile 300, including its present location, as said mobile with its local profile is seen by HLR2 as a subscriber to network 2. HLR2 may then send a registration update message to the profile manager node 351 which will subsequently updates the mobile 300 data. As illustrated in FIG. 3, both HLRl 313 and HLR2 323 may be operatively linked to the profile manager node 351 so that node 351 updates its database with the active profiles.

The profile manager node will also allow the deletion of local profiles. Indeed when act 440 is carried out with an identification triggering message from the profile manager node to the mobile, the profile manager node may deny the triggering message to the mobile node when a local profile stored on the mobile device is for some reasons no longer allowed. In an additional embodiment of the present method, the profile manager node may send a local profile deletion message to the mobile device, so that the mobile device deletes the corresponding local profile.

One may note that the present method as illustrated in FIG. 4 may be carried out each time a mobile detects a new network, randomly or periodically. Other triggering events may be envisaged, but are beyond the scope of the present invention.

One interesting implementation of the present method is with a home network in the presence of one of more corporate networks. Corporate networks of the same company may be disseminated over a large home network. The profile manager node may be provided for instance in the home network, and manage the different profiles for the company's employees. As a company network is detected, the mobile will inform the profile manager node through an update location message. Whether a local profile is sent to this mobile device or already present in the device, the mobile will identify itself with the company network using the local profile. The profile manager node will update its database accordingly with this local subscriber identity set as the "active profile".

Thanks to the present method, and to the different data exchanges between the mobile and the profile manager node, this node may track for a user:
- the current network he is located in,
- the list of subscriber identities available for this user's mobile
- the ones that are stored locally in his mobile, i.e. the ones which have been sent,
- the current subscriber identity used by the mobile, i.e. the subscriber identity the mobile used by the mobile to identity itself with its current network.

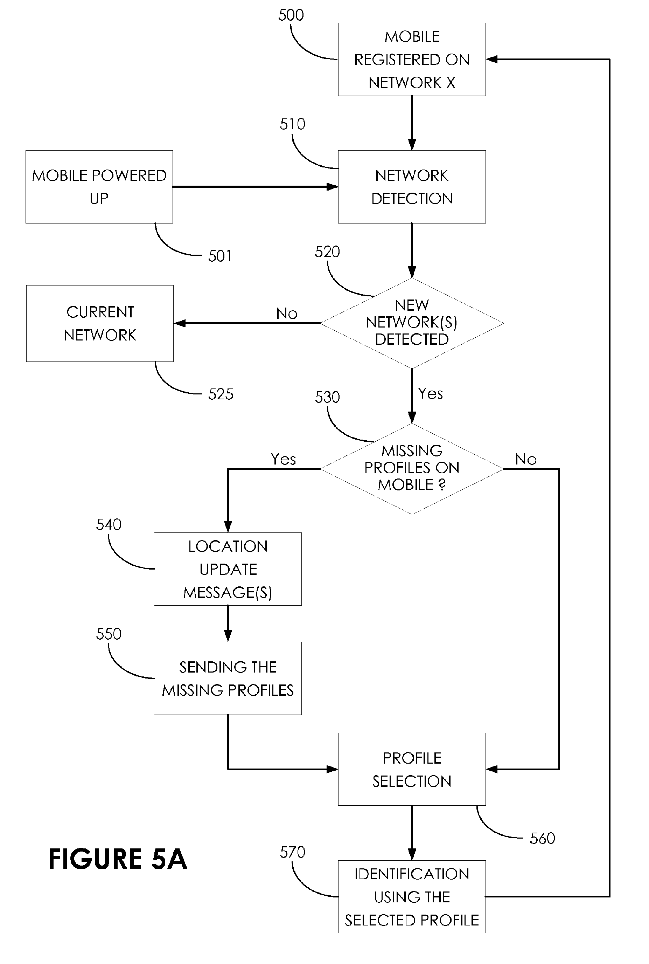

Thanks to the method and system described here above, a mobile will store a primary subscriber identity as well as a plurality of subscriber identities. When entering a visited network which overlaps other networks, the present method will be helpful in choosing one profile from the plurality of stored profiles on said mobile. FIG. 5a illustrates an additional embodiment of the present method, when implemented on the mobile device.

In an initial act 500, the mobile may be registered with a first network, say network X. Alternatively, the mobile may be powered up in act 501. Both of these acts will cause the mobile to activate its interfaces for network detection. Act 501 may occur if the network detection is started before identification with a network.

In a further act 510, the mobile will proceed with the detection of one or more visited network. All the detected networks will be referred to here after as visited networks. Act 510 corresponds to act 400 of FIG. 4.

In an additional act 520, the mobile will detect any new network. In case no new network is available, the mobile will remain registered with the current network (act 525). When new networks beside current network X are detected, the mobile will check in a further act 530 if any of the stored subscriber identities corresponds to the detected networks, i.e. if any local subscriber identities may be missing for the detected networks. The information collected when scanning for visited networks is generally the information broadcasted by any networks, such as its MNC (Mobile Network Codes), MCC (Mobile Country Code), ... As these parameters are also part of a subscriber identity (for instance a SIM profile), act 530 may be carried out using these parameters. The detected networks may fall in one of two groups:
- the networks for which no local subscriber identity is stored on the mobile, these missing local subscriber identities will be provided by the profile manager node,
- the networks for which a local subscriber identity is available (i.e. stored) on the mobile. These local subscriber identities may be profiles with different rights for a same network, or profiles for different networks. These stored local subscriber identities may either be local profiles sent by the profile manager node 351 in prior data exchanges with said node (e.g. as illustrated with FIG. 4), or profiles downloaded to the mobile through other means. Indeed network operators may push themselves local profiles to the mobile for their networks.

To allow the profile manager node to keep track of these additional local profiles, the mobile will inform, in an additional embodiment of the present method, the profile manager node through either:
- dedicated messages once these additional profiles are downloaded locally on the mobile,
- additional parameters in the update location messages, for instance, representing the profiles pushed to the mobile by other means than the profile manager node.

The profile manager node will update its database for said mobile accordingly, and may handle such profiles as any other profiles sent by the profile manager node.

Provided no local subscriber identities are missing in the mobile, e.g. there is no need for receiving another local subscriber identity, the profile selection of act 550 may be carried out right after act 530, as illustrated with the "No" branch in FIG. 5A.

In a further act 540 (branch "Yes" in FIG. 5A), the mobile will send one or more update location messages to inform the profile manager node 351 of all the visited networks currently detected by the mobile node and for which a local profile is missing. These update location messages will comprise network identities as well as data representative of the mobile primary subscriber identity, as in act 410 of FIG. 4.

For these missing local profiles, the profile manager node may proceed as described in relation to act 433 in FIG. 4, i.e. selecting a local profile from a pool of available profiles for a visited network. These selected local subscriber identities, corresponding to the missing profiles, will be subsequently sent to the mobile in an additional act 550.

In a further act 560, the mobile node will proceed with the selection of a local profile for one of the detected visited networks for subsequent identification in act 570. The 3GPP standard discloses an automatic selection that allows the mobile device to be always connected to the "best" available network. When several local profiles are available, the choice of right local profile for identification may be based on many triggers and local criteria like loss of coverage, periodicity, network priority, time of the day, available QoS (Quality of Service), level of access rights, ... Such criteria, stored on the mobile, are beyond the scope of the present method.

In the embodiment illustrated with FIG. 5A, the update location messages are used by the mobile to retrieve missing local subscriber identities, so that the mobile can subsequently identify itself (act 560) with the best right local profile in the right visited network. The profile manager node is then used as a provider of missing local profiles.

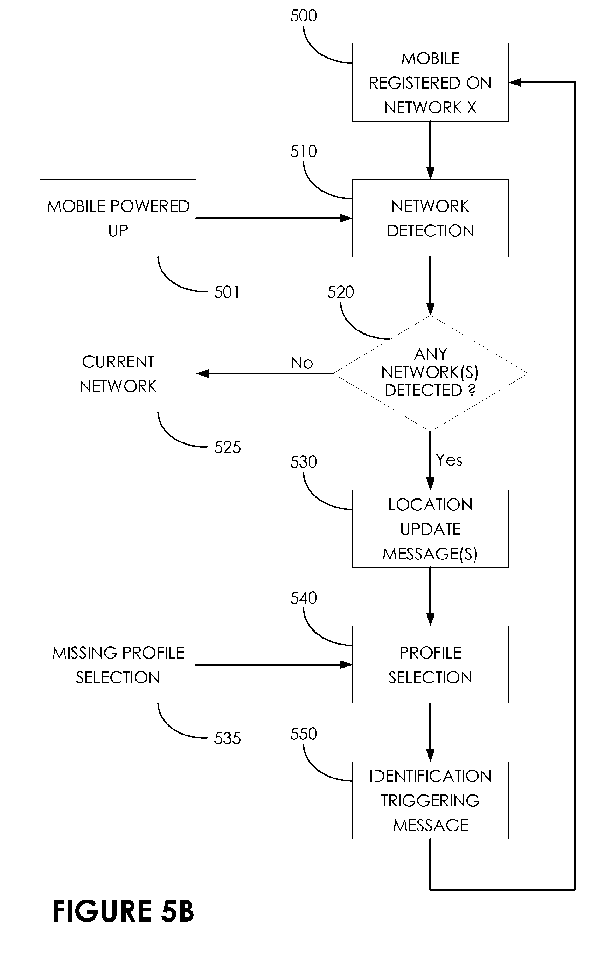

In an alternative embodiment of the present method illustrated in FIG. 5B, the profile manager node 351, besides providing the missing local subscriber identities, is in charge of the profile selection. Acts 500, 501 and 510 are identical to the same acts of FIG. 5A. Provided additional networks, besides network X, are detected (branch "Yes" in FIG. 5B), the mobile will send in a further act 530 one or more update location messages to inform the profile manager node of the visited networks currently detected.

As mentioned before, through the different message exchanges between the mobile and profile manager node, this node is aware of the local subscriber identities currently stored on the mobile device, for instance through its database as illustrated in Table 1. Thus from the update location messages in act 530, and the local subscriber identities already available on the mobile node, profile manager node 351 will identify the visited network(s) for which a local subscriber identity is missing on the mobile, i.e. not currently stored on the mobile.

In an additional act 540, the profile manager node will proceed with the (right) profile selection on behalf of the mobile node. Like the profile selection carried out by the mobile, the profile manager node will use a series of criteria to select the right profile for the mobile. The selection criteria will be applied to:
- the local profiles for the detected visited networks already stored in the mobile and that were sent previously by the profile manager node,
- the local profiles for the detected visited network and downloaded to the mobile using an alternative route (e.g. directly from a network operator),
- the local profiles from the pool of available profiles. This group of local profiles corresponds to the missing profiles, and their selection (act 535) may be carried out as in act 433.

One may note that the missing profile selection (act 535):
- may be carried out prior to the right profile selection of act 540, or simultaneously,
- may not be needed when the update location messages indicate that the mobile is currently seeing visited networks for which local profiles are available.

In a further act 550, the profile manager node will send an identification triggering message to the mobile node to identify itself with the selected profile. If the selected local profile is a new profile, it will be passed on to the mobile either in a specific message or as a parameter to the identification triggering message.

When no local profile is available for only one detected network, the method illustrated in relation to FIG. 5B is similar to the illustration of FIG. 4.

Both embodiments from FIGs. 5A and 5B will end as in FIG. 4 with a subsequent similar to act 450, wherein the profile manager node database, is updated with an indication that the selected local profile is the active (i.e. current) profile on the mobile. This update may be triggered through the receipt by the profile manager node of a registration update message.

The different messages mentioned in the present method may be in the form of SMS, USSD messages, IP packets or any other suitable means to exchange data between the profile manager node and the mobile device.

Thanks to the present method, the profile manager node, hence the mobility service platform 350 may track for a user:
- the current network he is located in,
- the list of subscriber identities available for this user's mobile
- the ones that are stored locally in his mobile,
- the current subscriber identity used by the mobile, i.e. the subscriber identity the mobile used by the mobile to identity itself with its current network.

One interesting feature of the present method and system is to enable the mobile 300 to receive data or call on its primary MSISDN even when it is registered in another network under a local subscriber identity.

In an additional embodiment of the present invention, a method for generating a communication path between a calling device and a called device is disclosed. One of the calling and called devices, referred to first device hereafter, stores a home subscriber identity to identify itself as a subscriber to a home geographic region, this first station further storing at least another subscriber identity, namely a local subscriber identity to identify itself as a subscriber to a visited geographic region distinct from the home geographic region. In other words, the first device is the device which stores one or more local profiles besides its home (primary) profile, and can identify itself with other visited networks besides its primary network. Setting such a communication will comprise the acts of:
- receiving a registration update message from the first device, said registration update reporting that the first device has identified itself with the visited geographic region using the local subscriber identity,
- receiving a communication signaling message to establish a communication path between the calling device to the called device,
- identifying the first device from the communication signaling message through one of the subscriber identity from a group comprising its local subscriber identity and its home subscriber identity,
- generating the communication path between the calling and called devices using the other one of the subscriber identities.

The present method to set a communication path is enabled in the present system whether the first device is the calling or the called device. The case wherein the first device is the called device will be illustrated in relation to FIG. 7A, while the other case, wherein the first device is the calling device, will be illustrated in FIG. 7B.

When a communication path is set up between both calling and called devices, different entities of the present telecommunication system are involved. A communication between two users generally involves a two level exchange mechanism:
- a signaling level corresponding to the signaling messages exchanges through the network entities between the two devices,
- a media level for handling data, voice, ...

FIG. 6 is an illustration of the telecommunication system enabling the mobile 600 to place and receive a communication (call, SMS, MMS, data, ...) when registered with a local subscriber identity (Profile2) 610 on network 2. Its primary subscriber identity corresponds to network 1, its primary network. Mobile 600 corresponds to the first device. As mentioned before, a subscriber identity is associated in a network to a MSDISN identifying the corresponding subscriber in this network, hence there is a unique correspondence between a subscriber identity and its corresponding MSISDN. The primary profile is characterized by a first MSISDN, namely MSISDN1, while the local profile for network 2 is associated in said network 2 with a second MSISDN, namely MSISDN2.

A mobility service platform 650, comprising a profile manager node 651 as described previously and a call management node 652. Furthermore, Networks 1 and 2 are operatively linked through gateways 615 and 625 respectively.

Another user, with communication device 660 (mobile or not), may only be aware of mobile 600 first MSISDN. Conversely, the user of first device 600 may want to call or send data to device 660 using his first MSISDN, when registered in network 2 under the local profile 610. Communication device 660 may be located in either networks, or elsewhere in the present telecommunication system.

The hereafter illustrations will be described in relation to a call between the two devices. The present teaching will be easily transposed to any type of communications between these two devices.

FIG. 7A illustrates an embodiment of the communication path generation between the calling device 660, initiating the call, and the called device 600, registered in network 2 with its local subscriber identity 610. The first device is the called device 600.

In a preliminary act 700, mobile 600 identifies itself in network 2 using the second profile 610. As explained before in relation to FIG. 4, the profile manager node 651 is informed through a registration update message, sent either directly by the mobile itself, or through a third party such as HLR1 613 in network 1 or HLR2 623 in network 2. The profile manager node 651 is now aware that the local profile Profile2 is the current profile for the mobile 600.

The user of the calling device is not necessarily aware that the device 600 is currently registered in network 2, as a subscriber to this network. Therefore, the user of the calling device 660 initiates a call to device 600, using its first MSISDN1 number. A call signaling message is sent by device 660 in the network it is presently in, for setting a call path between both devices. The call signaling message may be intercepted in a further act 710 by the mobility service platform 650, and more specifically by the call management node 652. A first communication leg is formed between the calling device 660 and call management node 652.

The call management node 652 and profile manager node 651 may or may not be physically separated. The communication between the call management part and the profile manager part can be conducted in accordance with any appropriate communication scheme. The call management node 652 may be located on a communication path to the termination of the call in network 1, as the calling device is trying to reach a subscriber of network 1. If located outside network 1, it may be operatively linked to a gateway which is aware that the call signaling message ought to be routed to the call management node 652.

In a further act 720, the call management node 652 will identify the mobile 600 as the recipient of the call. The call signaling message will comprise mobile 600 first MSISDN. In order to identify the first device, call management node will check the profile manager node 651 database. This database may comprise information on device 600 similar to the data illustrated in Table 1 mentioned previously. Following the registration update message in act 700, the entry for Profile 2 has been update to "current profile: Yes" as illustrated in Table 3:

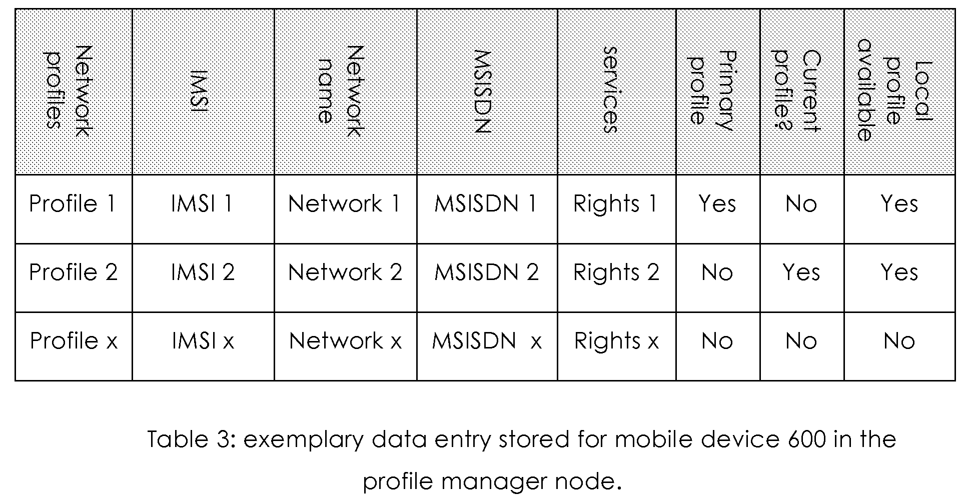

Through the call signaling message and a lookup in profile manager node database, the call management node 652 can link MSISDN1 to device 600, using the unique MSISDN/"subscriber identity" correspondence. As the primary profile Profile1 is not the current profile for device 600 (entry "No" in Table 3), call management node will further find out that the local profile Profile2, corresponding to MSISDN2, is the active one. In other words, call management node 652 identifies the first device 600 from the call signaling message through its primary subscriber identity, Profile1.

In a further act 730, call management node 652 will create a communication path to network 2 and the called device 600, using MSISDN2. A second communication leg is formed between call management node 652 and the called device. Actually, call management node 652, using again the unique correspondence between MSISDN/"subscriber identity", will generate the communication path to the called device 600 using the local profile Profile2, i.e. the other profile (of the profiles stored in device 600) than the one used to identify the first device in the call signaling message.

In a further act 740, call management node 652 will join the two communication legs together to form the complete communication path between the two devices 600 and 660.

When the first device 600 is registered in its primary network using Profile1, acts 700 to 720 may be carried out in a similar way up to the profile manager node database lookup to identify the device 600 through its primary profile and verify that Profile1 is the current profile. However the communication path may be established directly between the two devices, once call management node 652 has confirmed that mobile 600 is registered in network 1, as the change in MSISDN is not needed.

FIG. 7B illustrates an embodiment of the communication path generation between the calling device 600, registered in network 2 with its local subscriber identity 610 initiating and the call, and the called device 660. The first device is the calling device 600.

The preliminary act 700, i.e. the receipt of the registration update message is identical to the same act 700 in FIG. 2A. The user of the calling device, even if currently registered in network 2, as a subscriber to this network, may want to call device 600 while its first MSISDN1 number, for instance to charge his subscriber account associated to him primary profile in network 1.

A call signaling message is sent by first device 600 from network 2 for setting a call path between both devices. The call signaling message may be intercepted in a further act 710 by the mobility service platform 650, as explained here before with the same act in FIG. 7B. A first communication leg is formed between the calling device 660 and call management node 652.

In order to facilitate the routing of the call signaling message to call management node 652, in a further embodiment of the present method, a local point of presence for the MSP 650, LPP 655 as illustrated in FIG. 6, may be introduced in the visited network. LPP 655 will rout the signaling message directly to the MSP location, for instance in network 1 as illustrated in FIG. 6. This local point of presence may be reached through a local phone number in the visited network 2. When a new local profile is downloaded to the mobile or pushed by the profile manager node as illustrated in relation to FIG. 4, 5A and 5B, the LPP number may be associated to the sending of the selected local profile. Other ways to obtain this number could be envisaged, such as pushing the LPP number to the mobile the first time it identifies itself with the visited network 2. In this additional embodiment, one LPP, and a local LPP number could be provided in each visited networks.

The LPP number for each subscriber identity stored in the calling device 600 may be available in a local database as illustrated in Table 4:

**Table 4: mobile 600 local database with LPP number**

| Network profiles | Network name | LPP number |
|---|---|---|
| Profile 1 | Network 1 | Number1 |
| Profile 2 | Network 2 | Number2 |
| Profile x | Network x | Numberx |

When generating the call signaling message, mobile 600 will look up in its local database for the LPP 655 number. Mobile 600 will then establish a call to this number, for instance Number2. Once the call is connected to LPP 655, it may subsequently send the number of the called device 660. This may be done for instance through DTMF (Dual-tone multi-frequency) tones. Other solutions are readily available to the man skilled in the art for passing the called device phone number to call management node 652. When the LPP 655 is used, call management node 652 will receive a call signaling message from the LPP to establish a communication path between the calling and the called devices.

In a further act 720, the call management node 652 will identify the mobile 600 as the initiator of the call. The call signaling message will comprise mobile 600 second MSISDN, i.e. MSISDN2, as the called is made from network 2 using Profile2. In order to identify the first device, call management node will check the profile manager node 651 database. Using Table 3, call management node 652 can identify device 600 from MSISDN2, using the unique MSISDN/"subscriber identity" correspondence, and Profile2 as the current profile. In other words, call management node 652 identifies the first device 600 from the call signaling message through its local subscriber identity, Profile2.

In a further act 730, call management node 652 will create a communication path to the called device 660, using MSISDN1. A second communication leg is formed between call management node 652 and the called device 660. Actually, call management node 652, using again the unique correspondence between MSISDN/"subscriber identity", will generate the communication path to the called device 600 using the primary profile Profile1, i.e. the other profile (of the profiles stored in device 600) than the one used to identify the first device in the call signaling message.

In a further act 740, call management node 652 will join the two communication legs together to form the complete communication path between the two devices 600 and 660.

In order to inform call management node 652 that the user of the calling device 600 wants to use its primary number MSISDN1 to place a call, he could either for instance:
- activate an option on his mobile 600 (e.g. through a client installed on this mobile) so that a parameter is passed on to call management node to operate a switch between the current MSISDN (MSISDN2) and the primary MSISDN (MSISDN1),
- when a local point of presence is available in network 2, through the simple use of the LPP number.

In an additional embodiment of the present method for generating a communication path, the user could chose to present a different profile then the home profile. For instance profile selection could be based on static user preferences configured onto the mobile device 600, but also on a dynamic selection performed on a per-call basis. The called device 660 number may be used as well to decide which profile to present. FIGs. 7A and 7B were illustrated using the primary profile Profilel1 (and a corresponding MSISDN1) and a local profile Profile2 (and a corresponding MSISDN2). The present teachings may be generalized to a first and second profiles, the second profile being the current profile, and:
- the user of mobile 600 using the first profile to place a call, or
- the user of mobile 660 placing a call to the MSISDN 1, not knowing that the first device, mobile 600 is currently registered with Profile2.

In the description here above, reference was made to the primary or home profile and primary (or home) network. The primary network ought to be seen as a reference network, which is used to identify the user and his mobile in the present system and method. If a user owns a plurality of profiles, he may choose at any time to select one of them as the primary profile, and the corresponding network as the primary network.

Finally, the above-discussion is intended to be merely illustrative of the present system and should not be construed as limiting the appended claims to any particular embodiment or group of embodiments. Thus, while the present system has been described with reference to exemplary embodiments, it should also be appreciated that numerous modifications and alternative embodiments may be devised by those having ordinary skill in the art without departing from the broader and intended spirit and scope of the present system as set forth in the claims that follow.

The section headings included herein are intended to facilitate a review but are not intended to limit the scope of the present system. Accordingly, the specifications and drawings are to be regarded in an illustrative manner and are not intended to limit the scope of the appended claims.

In interpreting the appended claims, it should be understood that:
a) the words "comprising" or "including" do not exclude the presence of other elements or acts than those listed in a given claim;
b) the word "a" or "an" preceding an element does not exclude the presence of a plurality of such elements;
c) any reference signs in the claims do not limit their scope;
d) several "means" may be represented by the same item or hardware or software implemented structure or function;
e) any of the disclosed elements may be comprised of hardware portions (e.g., including discrete and integrated electronic circuitry), software portions (e.g., computer programming), and any combination thereof;
f) hardware portions may be comprised of one or both of analogue and digital portions;
g) any of the disclosed devices or portions thereof may be combined together or separated into further portions unless specifically stated otherwise;
h) no specific sequence of acts or steps is intended to be required unless specifically indicated; and
i) the term "plurality of" an element includes two or more of the claimed element, and does not imply any particular range of number of elements; that is, a plurality of elements may be as few as two elements, and may include an immeasurable number of elements.

## Claims

1. In a telecommunication system comprising at least a home geographic region and a visited geographic region, a method of providing a mobile device with access to communication services, said method comprising the acts of:
- receiving an update location message from a mobile device entering the visited geographic region, the update location message comprising a home subscriber identity associated with said mobile device, said home subscriber identity allowing identification of said mobile device with a home geographic region different from said visited geographic region,
- verifying if no local subscriber identity for the visited geographic region has been previously sent to the mobile device,
and when no local subscriber identity has been previously sent, the method further comprises the acts of:
- selecting, at least based on the received home subscriber identity, a local subscriber identity from a pool of available local subscriber identities for the visited geographic region, each available local subscriber identity allowing, when used by a mobile device, identification with said visited geographic region and subsequent access to communication services from said visited geographic region,
- sending the selected local subscriber identity to the mobile device for subsequent access of said mobile to the plurality of telecommunication services after identification using said selected local profile.

2. A method according to the previous claim, said method further comprising an additional act of:
- sending an identification triggering message for triggering the identification of the mobile device with the local subscriber identity.

3. A method according to one of the previous claims, the method further comprising, after the act of sending the selected local subscriber identity, an act of:
- activating the sent local subscriber identity with the visited geographic region, said activation allowing any subsequent identification by the mobile in the visited network.

4. A method according to one of the previous claims, wherein the pool of available local subscriber identities comprises at least one of:
- a reserved local subscriber identity, said reserved local subscriber identity being valid permanently,
- a dynamic local subscriber identity, said dynamic local subscriber identity being valid temporarily.

5. In a telecommunication system comprising at least a home geographic region and a visited geographic region, a profile manager node adapted to providing a mobile device of said telecommunication system with access to communication services, said profile manager node being adapted to:
- receive an update location message from a mobile device entering the visited geographic region, the update location message comprising a home subscriber identity associated with said mobile device, said home subscriber identity allowing identification of said mobile device with a home geographic region different from said visited geographic region,
- verify if no local subscriber identity for the visited geographic region has been previously sent to the mobile device,
and when no local subscriber identity has been previously sent, the profile manager node is further adapted to:
- select, at least based on the received home subscriber identity, a local subscriber identity from a pool of available local subscriber identities for the visited geographic region, each available local subscriber identity allowing, when used by a mobile device, identification with said visited geographic region and subsequent access to communication services from said visited geographic region, and,
- send the selected local subscriber identity to the mobile device for subsequent access of said mobile to the plurality of telecommunication services after identification using said selected local profile.

6. A node according to the previous claim, said node being further arranged to:
- send an identification triggering message for triggering the identification of the mobile device with the sent local subscriber identity.

7. A node according to one of the previous claims 5 and 6, the node being further arranged to:
- activate the sent local subscriber identity with the visited geographic region, said activation allowing any subsequent identification by the mobile in the visited network.

8. A node according to one of the previous claims 5 to 7, wherein the pool of available local subscriber identities comprises at least one of:
- a reserved local subscriber identity, said reserved local subscriber identity being valid permanently,
- a dynamic local subscriber identity, said dynamic local subscriber identity being valid temporarily.

9. A mobile device comprising a home subscriber identity allowing identification of said mobile device with a home geographic region, said mobile device being adapted, when entering a visited geographic region different from the home geographic region, to:
- send an update location message comprising the home subscriber identity,
- receive, when no local subscriber identity allowing identification of said mobile device with the visited geographic region is present on the device, a local subscriber identity allowing said identification and subsequent access to communication services from said visited geographic region,
- identify with the visited geographic region using said received local profile for subsequent access of said mobile to the plurality of communication services.

10. A mobile device according to the previous claim, said mobile device being further arranged to identify with the visited geographic region after receiving an identification triggering message for triggering its identification with the received local subscriber identity.

11. A telecommunication system comprising at least a home geographic region and a visited geographic region, said system further comprising:
- a mobile device storing a home subscriber identity allowing identification of said mobile device with said home geographic region, and
- a profile management node adapted to:
- receive an update location message from the mobile device when entering the visited geographic region, the update location message comprising the home subscriber identity,
- verify if no local subscriber identity for the visited geographic region has been previously sent to the mobile device,
and when no local subscriber identity has been previously sent, the profile manager node being further adapted to:
- select, at least based on the home subscriber identity, a local subscriber identity from a pool of available local subscriber identities for the visited geographic region, each available local subscriber identity allowing, when used by a mobile device, identification with said visited geographic region and subsequent access to communication services from said visited geographic region,
- send the selected local subscriber identity to the mobile device,
the mobile device being further adapted to identify with the visited geographic region using the selected local subscriber identity.

12. A system according to the previous claim, wherein the profile manager node is further arranged to send an identification triggering message to the mobile device for triggering the identification of said mobile device with the sent local subscriber identity.

13. A system according to one of the previous claims 11 and 12, the visited geographic region further comprising a home location register node (HLR2) adapted to authenticate the local subscriber identity when the mobile device identify with the visited geographic region using said local subscriber identity, the profile manager node being further arranged to send a local subscriber identity activation message to said home location register, said activation message authorizing any subsequent identification by the mobile in the visited network.

14. A system according to one of the previous claims 11 to 13, wherein the pool of available local subscriber identities comprises at least one of:
- a reserved local subscriber identity, said reserved local subscriber identity being valid permanently,
- a dynamic local subscriber identity, said dynamic local subscriber identity being valid temporarily.

15. A computer readable carrier including computer program instructions that cause a computer to implement a method of providing a mobile device with access to communication services according to claims 1 to 4.
